# EUROPÄISCHE PATENTSCHRIFT

(11) **EP 2 695 668 B1**
(45) Veröffentlichungstag und Bekanntmachung des Hinweises auf die Patenterteilung: **11.10.2017**
(21) Anmeldenummer: 12179780.7
(22) Anmeldetag: 09.08.2012
(51) Int. Cl.: B01D 61/14, B01D 67/00, B01D 71/40, B01D 69/02, B01D 71/82

(54) **Verfahren zum Herstellen einer thermoresponsiven Filtrationsmembran und thermoresponsive Filtrationsmembran**
Method for producing a thermoresponsive filtration membrane and thermoresponsive filtration membrane
Procédé de fabrication d'une membrane de filtration thermosensible et membrane de filtration thermosensible

(43) Veröffentlichungstag der Anmeldung: 12.02.2014
(73) Patentinhaber: Helmholtz-Zentrum Geesthacht Zentrum für Material- und Küstenforschung GmbH, 21502 Geesthacht (DE)
(72) Erfinder: Abetz, Volker, 21335 Lüneburg (DE); Clodt, Juliana, 22117 Hamburg (DE); Rangou, Sofia, 21033 Hamburg (DE); Filiz, M. Volkan, 22763 Hamburg (DE)
(74) Vertreter: Seemann & Partner Patentanwälte mbB

(56) Entgegenhaltungen:
- WO-A1-2011/060631
- US-A1- 2002 001 571
- ANTTI NYKÄNEN ET AL: "Phase Behavior and Temperature-Responsive Molecular Filters Based on Self-Assembly of Polystyrene- block -poly( N -isopropylacrylamide)- bloc k -polystyrene", MACROMOLECULES, Bd. 40, Nr. 16, 1. August 2007 (2007-08-01), Seiten 5827-5834, XP055049394, ISSN: 0024-9297, DOI: 10.1021/ma070378i
- MENG T ET AL: "A thermo-responsive affinity membrane with nano-structured pores and grafted poly(N-isopropylacrylamide) surface layer for hydrophobic adsorption", JOURNAL OF MEMBRANE SCIENCE, ELSEVIER SCIENTIFIC PUBL.COMPANY. AMSTERDAM, NL, Bd. 349, Nr. 1-2, 1. März 2010 (2010-03-01), Seiten 258-267, XP026874436, ISSN: 0376-7388 [gefunden am 2009-11-29]
- LI P F ET AL: "Thermo-responsive gating membranes with controllable length and density of poly(N-isopropylacrylamide) chains grafted by ATRP method", JOURNAL OF MEMBRANE SCIENCE, ELSEVIER SCIENTIFIC PUBL.COMPANY. AMSTERDAM, NL, Bd. 337, Nr. 1-2, 15. Juli 2009 (2009-07-15), Seiten 310-317, XP026130326, ISSN: 0376-7388, DOI: 10.1016/J.MEMSCI.2009.04.010 [gefunden am 2009-04-15]
- ADINA JUNG ET AL: "Structure Formation of Integral Asymmetric Composite Membranes of Polystyrene-block-Poly(2-vinylpyridine) on a Nonwoven", MACROMOLECULAR MATERIALS AND ENGINEERING, Bd. 297, Nr. 8, 9. Februar 2012 (2012-02-09), Seiten 790-798, XP055049396, ISSN: 1438-7492, DOI: 10.1002/mame.201100359

## Beschreibung

Die Erfindung betrifft ein Verfahren zum Herstellen einer thermoresponsiven Mikrofiltrationsmembran oder Ultrafiltrationsmembran, sowie eine entsprechende thermoresponsive Filtrationsmembran.

Für die Filtration, insbesondere die Ultrafiltration, werden heutzutage überwiegend Membranen eingesetzt, die nach einem sogenannten Phaseninversionsverfahren hergestellt werden. Diese Membranen basieren auf einem polymeren Grundgerüst, das eine durchgehende Porosität aufweist, also eine poröse Struktur, die die Membran durchzieht. Die Größe der Poren bestimmt die Trenneigenschaften, also die Größe der Moleküle, die durch die Membran zurückgehalten werden bzw. die die Poren der Membran durchdringen können. Neben polymeren Membranen werden auch Membranen eingesetzt, die auf keramischen, gläsernen oder metallischen Materialien basieren.

Die polymeren, durch fällungsmittel- oder nichtlösemittel induzierte Phaseninversion hergestellten Membranen weisen üblicherweise eine mehr oder weniger große statistische Streuung bei der Verteilung der Porengröße auf, vgl. S. Nunes, K.-V. Peinemann (HrG.): Membrane Technology in the Chemical Industry, Wiley-VCH, Weinheim 2006, S. 23-32. Solche Membranen neigen zum so genannten "Fouling" und lassen wegen der breiten Streuung in der Verteilung der Porengröße keine präzise Trennung eines Stoffgemisches zu. Unter "Fouling" versteht man ein schnelles Verblocken der großen Poren, da ein Großteil der durch die Membran tretenden Flüssigkeit zunächst durch die großen Poren tritt. Seit einiger Zeit wird daher versucht, isoporöse Membranen herzustellen, d.h. Membranen mit einer geringen Streuung in der Verteilung ihrer Porengröße.

In dem deutschen Patent Nr. 10 2006 045 282 der Anmelderin ist ein Verfahren offenbart, mit dem Polymermembranen mit isoporösen trennaktiven Oberflächen herstellbar sind. Hierzu wird ein amphiphiles Blockcopolymer in einer Gießlösung mit einem oder mehreren Lösungsmitteln gelöst, zu einem Film ausgestrichen und der Film in ein Fällbad eingetaucht.

Dieses Verfahren nutzt den Umstand aus, dass die Polymerblöcke des amphiphilen Blockcopolymers untereinander nicht mischbar sind. In der Gießlösung bilden die Blockcopolymere daher Phasen aus, beispielsweise eine bekannte Mizellenstruktur mit sphärischen oder zylindrischen Mizellen. In einer kurzen Abdampfzeit verdampft ein oberflächennaher Teil des flüssigen Lösungsmittels, so dass in einer oberflächennahen Schicht des Films die Mikrophasenmorphologie, die sich aufgrund der Selbstorganisation der Polymerblöcke der Blockcopolymere ausgebildet hat, verfestigt, während im Bulk der Gießlösung sich die Blockcopolymere noch stets in Lösung befinden.

Durch das Eintauchen dieses Films in ein Fällbad wird der Rest des Lösungsmittels verdrängt und es findet ein bekannter Phaseninversionsprozess statt, der in einer bekannten schwammartigen Struktur resultiert. In einigen Fällen bleibt dabei die zuvor eingestellte mikrophasenseparierte isoporöse Struktur der oberflächennahen Schicht trotz des Eintauchens in das Fällbad erhalten. Diese geht dann direkt in die schwammartige Struktur über. Weitere Angaben sind in DE 10 2006 045 282 A1 enthalten, deren Offenbarung vollinhaltlich in der vorliegenden Patentanmeldung aufgenommen sein soll.

Die resultierende integral-asymmetrische Struktur entsteht aus einer Kombination von zwei verschiedenen thermodynamischen Prozessen. Das Verfahren ist für Blockcopolymere mit unterschiedlichen Polymerkomponenten durchführbar, die sich mittels Mikrophasenseparation in einem Lösungsmittel entmischen. So wurde in DE 10 2006 045 282 A1 die integral-asymmetrische Struktur der Blockcopolymermembranen am Beispiel einer auf PS-*b*-P4VP (Polystyrol-*b-*Poly-4-Vinylpyridin) beruhenden Membran gezeigt. Ähnliche Resultate wurden auch mit den chemisch deutlich unterschiedlichen PS-*b*-P2VP (Polystyrol-*b*-Poly-2-Vinylpyridin) und PS-*b*-PEO (Polystyrol-*b*-Polyethylenoxid) erzielt. Das Ergebnis mit PS-*b*-P2VP ist in A. Jung et al. (2012), "Structure Formation of Integral Asymmetric Composite Membranes of Polystyrene-block-Poly(2-vinylpyridine) on a Nonwoven", Macromol. Mater. Eng.. doi: 10.1002/mame.201100359 veröffentlicht. Die Resultate mit PS-*b-*PEO sind in der deutschen Patentanmeldung Nr. 10 2012 207 338.8 der Anmelderin gezeigt.

Diese und andere polymere Membranen, ebenso wie nicht-polymere Filtrationsmembranen, wie beispielsweise solche auf der Grundlage von Keramiken, sind jeweils üblicherweise nur für eine Anwendung verwendbar und unterliegen einem Fouling, also einem Verstopfen der Poren durch Anlagerung von Makromolekülen oder anderen verschmutzenden Inhaltsstoffen von zu filternden Flüssigkeiten.

Seit einigen Jahren werden Forschungsarbeiten vorangetrieben, Filtrationsmembranen schaltbar zu machen, also ihre Trenneigenschaften von äußeren kontrollierbaren Bedingungen abhängig zu machen. Eine Möglichkeit hierzu ist die Herstellung thermoresponsiver Membranen, also von Membranen, deren Trenneigenschaften von der Temperatur abhängen. So wurden Membranen hergestellt, die mit Poly(*N*-isopropylacrylamid) (abgekürzt pNIPAM) modifiziert wurden.

So zeigten T. Meng, R. Xie et al., Journal of Membrane Science 349 (1 - 2): 258 - 267 (2010) "A Thermo-Responsive Affinity Membrane with Nano-Structured Pores and Grafted Poly(N-isopropylacrylamide) Surface Layer for Hydrophobic Adsorption" eine Modifizierung von shirasu-porösen Glas (SPG) Membranen mit einer mittleren Porengröße von 1,8 µm, die durch plasmainduzierte Grafting-Polymerisation (Pfropfpolymerisation) modifiziert wurden. Dazu wurden nano-strukturierte Porenoberflächen durch die Deposition von Siliziumoxidnanopartikeln auf die Glasmembranporenoberflächen gebildet und pNIPAM-Büschel mittels Plasmainduktion auf die nano-strukturierte Porenoberfläche gegraftet. Die Porenoberflächen der Membran waren bei Temperaturen unterhalb von 20°C sehr hydrophil, oberhalb von 40°C sehr hydrophob.

Gemäß P. F. Li, R. Xie et al., Journal of Membrane Science 337 (1 - 2): 310 - 317 (2009), "Thermo-responsive Gating Membranes with Controllable Length and Density of Poly(*N*-isopropylacrylamide) Chains Grafted by ATRP Method" wurde pNIPAM mittels ATRP (Atom-Transfer Radical Polymerization) auf modifizierte anodische Aluminiumoxidmembranen (AAO) gebracht. Die so produzierte Membran zeigte eine starke Temperaturabhängigkeit zwischen 25°C und 40°C für die diffusive Permeation von Vitamin B12.

A. Nykänen, M. Nuopponen et al. berichteten in Macromolecules 40 (16): 5827 - 5834 (2007): "Phase Behavior and Temperature-Responsive Molecular Filters Based on Self-Assembly of Polystyrene-block-poly(N-isopropylacrylamide)-block-polystyrene" über die Herstellung von PS-pNIPAM-PS-Triblöcken, die anschließend mittels Spincoating auf Polyacrylnitrilmembranen gebracht wurden. Die gegrafteten Membranen zeigten ein deutliches temperaturabhängiges Schaltverhalten, wobei sich die Poren bei Temperaturen über 32°C schlossen.

Schließlich wurde gemäß G.-Q. Zhai, L. Ying et al., Surface and Interface Analysis 36 (8): 1048 - 1051 (2004) "Surface and Interface Characterization of Smart Membranes" zunächst eine Lösung hergestellt, bei der pNIPAM in PVDF-g-PAAC- und PVDF-g-P4VP-Lösungen eingemischt wurden und anschließend Phaseninversionsmembranen hergestellt wurden. Die Porengröße der so hergestellten Membran vergrößerte sich mit steigender Temperatur und sinkendem pH-Wert der wässrigen Gießlösung. Auch der Fluss durch die Membran war temperatur- und pH-abhängig.

Die zuvor genannten Herstellungsverfahren sind teilweise aufwendig und langwierig und führen zu Membranen, die zwar thermoresponsiv, jedoch wenig praxistauglich sind.

Die der Erfindung zugrunde liegende Aufgabe liegt demgegenüber darin, ein alternatives Verfahren zum Herstellen von thermoresponsiven Mikrofiltrationsmembranen oder Ultrafiltrationsmembranen anzugeben, sowie entsprechende Filtrationsmembranen, die eine hohe Thermoresponsivitität sowie hohe Praxistauglichkeit aufweisen, wobei das Verfahren schnell und sicher sein soll.

Diese Aufgabe wird gelöst durch ein Verfahren zum Herstellen einer thermoresponsiven Mikrofiltrationsmembran oder Ultrafiltrationsmembran, mit den folgenden Verfahrensschritten:
a) eine Filtrationsmembran wird mit einer Dopaminlösung benetzt oder beschichtet,
b) das Dopamin der Dopaminlösung wird polymerisiert, um eine Polydopaminschicht zu ergeben, und
c) die polydopaminbeschichtete Filtrationsmembran wird in eine Beschichtungslösung mit einem endfunktionalisierten Poly(*N-*isopropylacrylamid) getaucht und das Poly(*N*-isopropylacrylamid) wird an die Polydopaminschicht angebunden.

Die Erfindung beruht auf dem Grundgedanken, dass eine vorhandene Membran, etwa eine keramische, metallische, polymere oder auf einem gläsernen Substrat basierende Membran, nicht direkt mit pNIPAM modifiziert wird, sondern zunächst eine Polydopaminbeschichtung erhält. Dazu ist Dopamin zunächst in einer unpolymerisierten Form in einer Dopaminlösung vorhanden, in die die Filtrationsmembran eingetaucht oder mit der die Filtrationsmembran benetzt wird, wobei anschließend die Polydopaminschicht durch Polymerisierung des Dopamins der Schicht auf der Filtrationsmembran hergestellt wird. Die Polydopaminschicht haftet extrem gut an verschiedenen Oberflächen und damit an einer großen Vielzahl von Membranen an, so dass eine stabile Beschichtung erreicht wird, die auch unter verschiedenartigen Anwendungsbedingungen stabil bleibt. Erfindungsgemäß wird diese Polydopaminschicht durch pNIPAM modifiziert und die Membran derart thermoresponsiv gemacht. Die Membran selber unterhalb der Dopaminschicht wird nicht oder nur unwesentlich durch pNIPAM modifiziert. Die Polydopaminschicht wirkt somit als Funktionalisierungsmittler für die Membran.

Die Beschichtung mit einer Polydopaminschicht hat den weiteren Vorteil, dass die Polydopaminschicht sehr wirksam gegen Fouling ist. Die polydopaminbeschichtete Membran ist sehr viel weniger anfällig für das Blockieren von Poren durch Inhaltsstoffe der zu filtrierenden Lösungen als die nicht-polydopaminbeschichtete Membran.

Die Vorgehensweise, dass zunächst das Dopamin in der Dopaminbeschichtung polymerisiert wird und erst anschließend die Funktionalisierung bzw. Modifizierung mit pNIPAM geschieht, hat außerdem den Vorteil gegenüber einer direkten Modifizierung des Dopamins, dass die Polymerisierung und damit die flächige Beschichtung der Membran abgeschlossen ist und die Membran unterhalb der Polydopaminschicht somit vollständig geschützt ist.

Außerdem findet die Funktionalisierung an der Oberfläche der Polydopaminschicht statt, wodurch das pNIPAM seine (maximale) thermoresponsive Wirkung entfaltet. Hierbei wird das pNIPAM an das Dopamin angebunden, wobei insbesondere das Dopamin vorher beispielsweise bei einem pH-Wert von 8.5 bei Raumtemperatur polymerisiert.

Ein weiterer Vorteil des erfindungsgemäßen Verfahrens ist, dass Membranen, die bereits im unmodifizierten Zustand andere Responsivitäten aufweisen, beispielsweise pH-responsiv sind, diese Responsivität auch nach der Modifizierung, d.h. nach der Beschichtung mit Dopamin, der Polymerisierung der Dopaminschicht und der Funktionalisierung mit pNIPAM, behalten. Solche Membranen, wie sie beispielsweise in DE 10 2006 045 282 der Anmelderin auf der Grundlage von PS-b-P4VP offenbart sind und die eine pH-Responsivität aufweisen, behalten diese auch nach der erfindungsgemäßen Modifizierung.

Vorzugsweise ist das endfunktionalisierte Poly(*N*-isopropylacrylamid) amin-terminiert. Die Terminierung von pNIPAM mit einem Amin an seinem Ende ermöglicht eine besonders sichere und einfache Modifizierung der Polydopaminschicht, da diese sehr leicht und sicher Bindungen mit Amingruppen eingeht.

Die Strukturformel eines möglichen amin-terminierten pNIPAM sieht wie folgt aus: 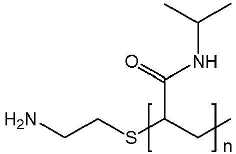 wobei n die Anzahl der sich wiederholenden Monomereinheiten angibt.

Vorzugsweise weist das Poly(*N*-isopropylacrylamid) ein mittleres Molekulargewicht Mₙ von etwa 1.000 bis 10.000, insbesondere zwischen 2.000 und 4.000, insbesondere bei etwa 2.500, auf. Diese Größe des pNIPAM ist besonders geeignet für die Größe der Poren bei Ultrafiltrationsmembranen und Nanofiltrationsmembranen, die einen Durchmesser zwischen 10 nm und 1 µm haben, vorzugsweise weniger als 100 nm Durchmesser.

Bei der oben gezeigten Strukturformel ergibt sich bei einem durchschnittlichen Molekulargewicht zwischen 1.000 und 10.000 eine Anzahl von ca. 8 bis 90 Monomereinheiten.

Im Verfahrensschritt a) wird die Filtrationsmembran vorzugsweise in eine Dopaminlösung aus Dopaminhydrochlorid, insbesondere gelöst in Trispuffer, getaucht, vorzugsweise bei Raumtemperatur, insbesondere für eine Dauer von 30 bis 120 Minuten, insbesondere 45 bis 75 Minuten.

Vorzugsweise wird die Filtrationsmembran im Verfahrensschritt b) gewaschen und/oder getrocknet, insbesondere bei einer Temperatur zwischen 50°C und 70°C, vorzugsweise für mindestens 30 Minuten, vorzugsweise zwischen 45 Minuten und 180 Minuten. Beispielsweise wird die Filtrationsmembran 60 Minuten bei 60°C getrocknet.

Vorzugsweise wird im Verfahrensschritt c) die Filtrationsmembran in eine Funktionalisierungslösung aus pNIPAM-NH₂, vorzugsweise gelöst in Trispuffer, getaucht.

Dabei ist Trispuffer eine schwach basische organische Verbindung, die eine gute Pufferwirkung besitzt. Hauptbestandteil ist Tris(hydroxymethyl)aminomethan. Sie besitzt eine gute Pufferkapazität im pH-Bereich zwischen 7,2 und 9,0.

Die Filtrationsmembran wird im Verfahrensschritt c) vorzugsweise in der Lösung zunächst für eine Dauer von 2 bis 4 Stunden bei einer Temperatur von 50°C bis 70°C und anschließend für eine Dauer von mehr als 6 Stunden zwischen 18°C und 25°C geschüttelt. Unter diesen Bedingungen ergibt sich eine optimale Modifizierung der Filtrationsmembran bzw. der Polydopaminschicht.

Vorzugsweise wird die Filtrationsmembran nach dem Verfahrensschritt c) gewaschen und/oder getrocknet.

Vorteilhafterweise weisen die Dopaminlösung und die Beschichtungslösung keine Lösemittel für die Filtrationsmembran auf. Damit wird die zugrundeliegende Membran während der Modifikation nicht beschädigt.

Vorzugsweise ist die verwendete Filtrationsmembran eine, insbesondere isoporöse und/oder integral-asymmetrische, Blockcopolymermembran, insbesondere auf der Grundlage eines PS-*b-*P4VP, eines PS-*b*-P2VP oder eines PS-*b*-PEO Blockcopolymers. Diese Membranen weisen eine integralasymmetrische Struktur auf, bei der eine trennaktive Schicht mit einer isoporösen, mikrophasenseparierten Struktur übergangslos in eine schaumartige Struktur eines lösungsmittelinduzierten Phasenübergangs übergeht. Diese werden durch die Polydopaminschicht besonders vorteilhaft beschichtet, weisen bereits eine pH-Responsivität auf und werden die Modifikation mit pNIPAM zusätzlich thermoresponsiv gemacht. Die Erfindung ist hierauf allerdings nicht beschränkt, sondern auf alle Arten von Filtrationsmembranen anwendbar, die mit Polydopamin beschichtet werden können.

Die der Erfindung zugrundeliegende Aufgabe wird auch durch eine thermoresponsive Filtrationsmembran gelöst, insbesondere Mikrofiltrationsmembran oder Ultrafiltrationsmembran, die insbesondere hergestellt oder herstellbar nach dem zuvor beschriebenen erfindungsgemäßen Verfahren ist, mit einer Polydopaminbeschichtung, die mit pNIPAM funktionalisiert ist. Diese thermoresponsive Filtrationsmembran weist die zuvor beschriebenen Eigenschaften, Merkmale und Vorteile auf.

Vorzugsweise tritt eine Öffnung von Poren der Filtrationsmembran oberhalb von etwa 20°C, insbesondere oberhalb von etwa 25°C, auf. Die Temperatur, bei der der Übergang von geschlossenen zu offenen Poren aufgrund der Ausdehnung der Büschel von pNIPAM-Ketten auftritt, hängt unter anderem von der Konzentration der Lösung ab.

Die Poren der Filtrationsmembran weisen vorzugsweise einen Durchmesser zwischen 10 nm und 500 nm, insbesondere bis zu 100 nm, auf. Dies bezieht sich auf den nicht geschlossenen Zustand der Poren.

Die thermoresponsive Filtrationsmembran kann insbesondere eine Flachmembran oder Hohlfadenmembran sein.

Die Filtrationsmembran ist vorzugsweise zusätzlich pH-responsiv, wobei insbesondere eine Schließung der Poren bei einem niedrigen pH-Wert, insbesondere unterhalb von etwa 3,8 bis 3,4, eintritt. Der Schwellwert des pH-Werts hängt von der Art der Membran ab.

In einer bevorzugten Ausbildung der erfindungsgemäßen thermoresponsiven Filtrationsmembran ist die Filtrationsmembran eine Polymermembran, insbesondere eine isoporöse und/oder intregralasymmetrische Blockcopolymermembran, insbesondere auf der Grundlage eines PS-*b*-P4VP, eines PS-*b*-P2VP oder eines PS-*b-*PEO Blockcopolymers.

Weitere Merkmale der Erfindung werden aus der Beschreibung erfindungsgemäßer Ausführungsformen zusammen mit den Ansprüchen und den beigefügten Figuren ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Figuren beschrieben, wobei bezüglich aller im Text nicht näher erläuterten erfindungsgemäßen Einzelheiten ausdrücklich auf die Figuren verwiesen wird. Es zeigen:
- Fig. 1: Signale chemischer Verschiebungen einer polydopaminbeschichteten Membran mit und ohne Funktionalisierung mit pNIPAM,
- Fig. 2: IR-Spektren von unbeschichteten, beschichteten und funktionalisierten Membranen,
- Fig. 3: die Temperaturabhängigkeit des Wasserflusses einer unbeschichteten, einer beschichteten und einer modifizierten Membran,
- Fig. 4: pH-Abhängigkeit des Wasserflusses einer modifizierten Membran bei verschiedenen Temperaturen,
- Fig. 5: rasterelektronenmikroskopische Aufnahmen einer Oberfläche und eines Querbruchs einer unbeschichteten Membran und
- Fig. 6: rasterelektronenmikroskopische Aufnahmen einer Oberfläche und eines Querbruchs einer beschichteten und modifizierten Membran.

Im Folgenden wird die Erfindung anhand eines Beispiels einer Flachmembran auf der Grundlage des Blockcopolymers Polystyrolblock-poly-4-vinylpyridin (PS-*b*-P4VP) erläutert.

Die Blockcopolymermembranen wurden nach der Vorgabe des Verfahrens, das im deutschen Patent Nr. 10 2006 045 282 der Anmelderin offenbart ist, hergestellt und weisen eine isoporöse, mikrophasenseparierte trennaktive Oberflächenschicht auf, die übergangslos und direkt in eine typische lösungsmittelinduzierte phasenseparierte schwammartige Struktur übergeht.

Die Blockcopolymermembranen (etwa 4 cm x 4 cm) wurden in eine Reaktionslösung aus 2mg/ml Dopamin Hydrochlorid, gelöst in 15 mM Trispuffer (Tris(hydroxymethyl)aminomethan, pH 8,5 - 8,8, Reinstwasser), getaucht und auf einem Schüttler 60 min bei Raumtemperatur in einem offenen Gefäß geschüttelt. Anschließend wurden die Membranen dreimal für 30 min mit Reinstwasser gewaschen und bei 60°C getrocknet.

Zur Modifizierung wurde pNIPAM-NH₂ von Sigma Aldrich mit einem mittleren Molekulargewicht Mₙ von 2.500 (Produkt Nr. 724823) verwendet.

Die Membranen wurden in den verschiedenen Phasen vor der Beschichtung, nach der Beschichtung und nach der Modifikation mittels NMR (Nuclear Magnetic Resonance), IR (Infrarot-Spektrometrie), Wasserfluss-Messung und REM (Rasterelektronenmikroskopie) charakterisiert.

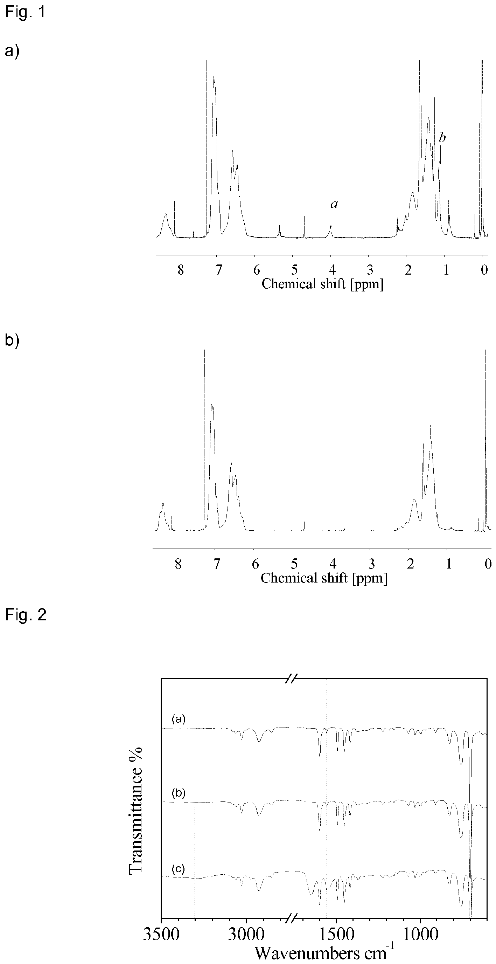

In den Fig. 1a) und 1b) sind die Signale der chemischen Verschiebung im NMR gezeigt, wobei in Fig. 1a) die chemische Verschiebung der polydopaminbeschichteten und pNIPAM-modifizierten Membran gezeigt ist, während in Fig. 1b) zum Vergleich die chemische Verschiebung (chemical shift) der unmodifizierten polydopaminbeschichteten Membran gezeigt ist. Mit den Buchstaben a und b in Fig. 1a) sind Signale bei den chemischen Verschiebungen von 4,0 und 1,1 ppm gezeigt, die der Isopropylgruppe von pNIPAM zuzuordnen sind. Diese sind in Fig. 1b) nicht vorhanden.

In Fig. 2 sind IR-Spektren der (a) PS-*b*-P4VP-Membran, (b) der mit Polydopamin beschichteten PS-*b*-P4VP-Membran und (c) der mit Polydopamin beschichteten PS-*b*-P4VP-Membran nach der Reaktion mit pNIPAM-NH₂ gezeigt.

Zwischen den IR-Spektren der PS-*b*-P4VP-Membran vor und nach der Polydopaminbeschichtung gibt es keine signifikanten Unterschiede (vgl. Fig. 2(a) und (b)). Nach weiterer Umsetzung mit pNIPAM-NH₂ (vgl. Fig. 2(c)) zeigt das IR-Spektrum charakteristische Peaks für sekundäre Amide: die C=O Streckschwingung und die N-H in-plane Deformationsschwingung bei 1650 und 1550 cm⁻¹. Das verbreiterte Signal bei 3600-3200 cm⁻¹ ist der N-H-Streckschwingung sekundärer Amide zuzuordnen. Die beiden kleinen Peaks bei 1369 und 1388 cm⁻¹ sind den Deformationsschwingungen der Isopropylgruppe des pNIPAM Gerüstes zuzuordnen.

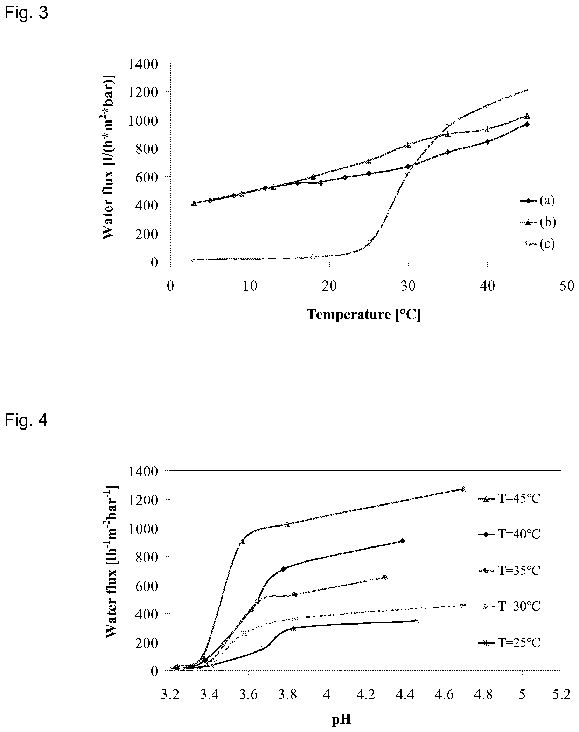

In Fig. 3 und Fig. 4 sind Wasserflussmessungen bezüglich der erfindungsgemäßen Membran sowie deren Vorläufer gezeigt. Daraus ergibt sich, dass die mit pNIPAM modifizierte Membran thermo- und pH-responsiv ist.

Hierzu wurden verschiedene Wasserflussmessungen in einem deadend System bei ca. 2,1 bar zwischen 3°C und 45°C durchgeführt. Die Ergebnisse sind in Fig. 3 gezeigt. Bei der unbeschichteten Membran (a) und der polydopaminbeschichteten, aber unmodifizierten Membran (b) steigt der Wasserfluss mit der Temperatur in etwa linear an. Bei der mit pNIPAM modifizierten Membran (c) steigt der Wasserfluss im Bereich der sogenannten "lower critical solution temperature (LCST)" von pNIPAM bei ca. 25°C extrem steil an. Unter 25°C sind die Poren fast geschlossen. Typischerweise hat pNIPAM eine LCST bei ca. 30°C bis 32°C.

In Fig. 4 ist gezeigt, dass die mit pNIPAM modifizierte Membran immer noch pH-responsiv ist, eine Eigenschaft, die die PS-*b*-P4VP-Membranen besitzen. Hierzu wurden Wasserflüsse in Abhängigkeit des pH-Werts bei fünf verschiedenen Temperaturen zwischen 25°C und 45°C gemessen. Bei allen Temperaturen verringert sich gemäß Fig. 4 der Wasserfluss bei pH-Werten zwischen 3,8 und 3,4, was zeigt, dass die Membran weiterhin pH-responsiv ist.

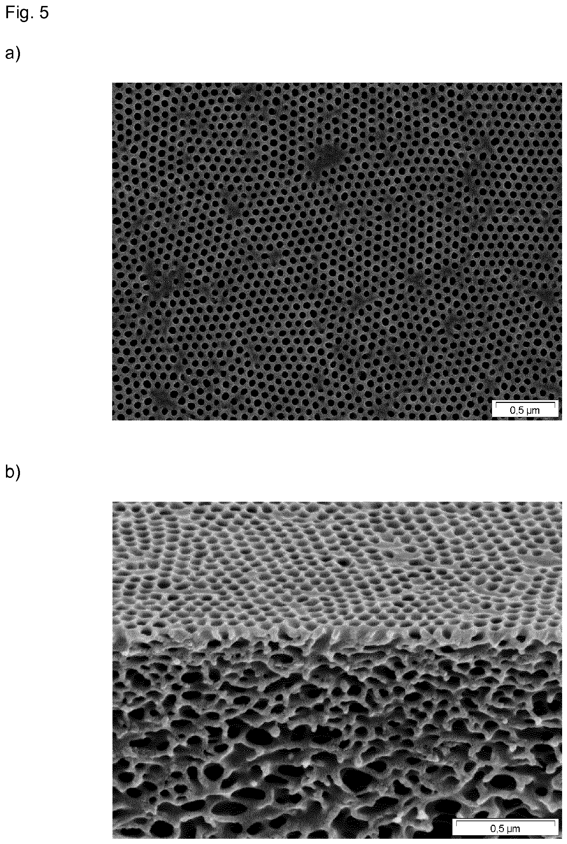

In Fig. 5a), 5b) sind REM-Aufnahmen der Oberfläche und eines Querbruchs einer PS-*b*-P4VP-Membran vor der Modifizierung mit pNIPAM gezeigt. Es zeigt sich die typische integralasymmetrische Struktur, bei der die trennaktive Oberfläche eine regelmäßige isoporöse mikrophasenseparierte Struktur aufweist, die durch die Selbstorganisation der Blockcopolymere entsteht, beim Abdampfen eines oberflächennahen Teils des Lösungsmittels, wobei diese regelmäßige Struktur in eine typische schwammartige Struktur der lösungsmittelinduzierten Phaseninversion übergeht.

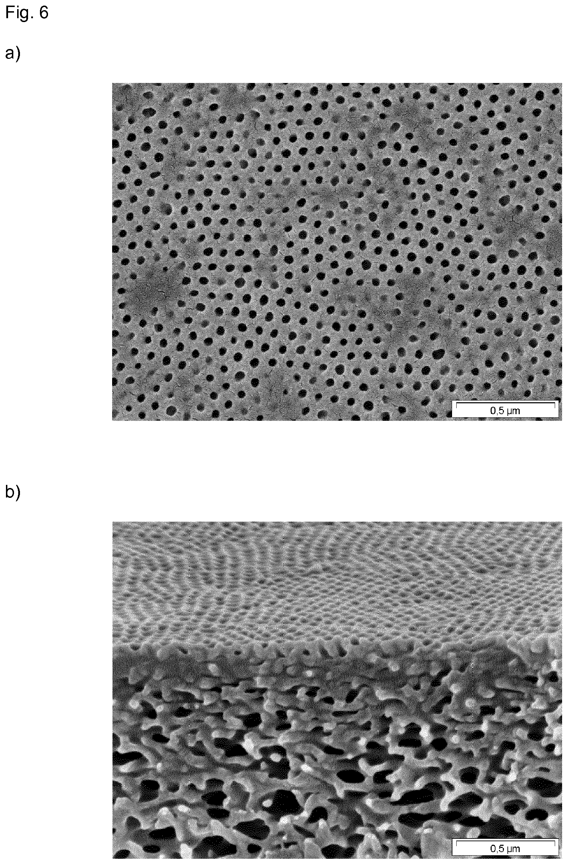

In Fig. 6a), 6b) ist im Vergleich dazu eine REM-Aufnahme der Oberfläche bzw. des Querbruchs einer entsprechenden Membran nach der Modifizierung mit pNIPAM gezeigt. Die Struktur der Poren der trennaktiven Oberflächenschicht als auch der schwammartigen Struktur im Bulk ist erhalten geblieben, wobei durch die Beschichtung und die Modifizierung der Durchmesser der Poren abgenommen hat.

Alle genannten Merkmale, auch die den Figuren allein zu entnehmenden sowie auch einzelne Merkmale, die in Kombination mit anderen Merkmalen offenbart sind, werden allein und in Kombination als zur Erfindung gehörend angesehen. Erfindungsgemäße Ausführungsformen können durch einzelne Merkmale oder eine Kombination mehrerer Merkmale erfüllt sein.

## Patentansprüche

1. Verfahren zum Herstellen einer thermoresponsiven Mikrofiltrationsmembran oder Ultrafiltrationsmembran, mit den folgenden Verfahrensschritten:
a) eine Filtrationsmembran wird mit einer Dopaminlösung benetzt oder beschichtet,
b) das Dopamin der Dopaminlösung wird polymerisiert, um eine Polydopaminschicht zu ergeben, und
c) die polydopaminbeschichtete Filtrationsmembran wird in eine Beschichtungslösung mit einem endfunktionalisierten Poly(*N*-isopropylacrylamid) getaucht und das Poly(*N*-isopropylacrylamid) wird an die Polydopaminschicht angebunden.

2. Verfahren nach Anspruch 1, **dadurch gekennzeichnet, dass** das endfunktionalisierte Poly(*N*-isopropylacrylamid) amin-terminiert ist.

3. Verfahren nach Anspruch 1 oder 2, **dadurch gekennzeichnet, dass** das Poly(*N*-isopropylacrylamid) ein mittleres Molekulargewicht Mₙ von etwa 1.000 bis 10.000, insbesondere zwischen 2.000 und 4.000, insbesondere bei etwa 2.500, aufweist.

4. Verfahren nach einem der Ansprüche 1 bis 3, **dadurch gekennzeichnet, dass** im Verfahrensschritt a) die Filtrationsmembran in eine Dopaminlösung aus Dopaminhydrochlorid, insbesondere gelöst in Trispuffer, getaucht wird, insbesondere bei Raumtemperatur, insbesondere für eine Dauer von 30 bis 120 Minuten, insbesondere 45 bis 75 Minuten.

5. Verfahren nach einem der Ansprüche 1 bis 4, **dadurch gekennzeichnet, dass** die Filtrationsmembran im Verfahrensschritt b) gewaschen und/oder getrocknet wird, insbesondere bei einer Temperatur zwischen 50°C und 70°C, vorzugsweise für mindestens 30 Minuten, vorzugsweise zwischen 45 Minuten und 180 Minuten.

6. Verfahren nach einem der Ansprüche 1 bis 5, **dadurch gekennzeichnet, dass** im Verfahrensschritt c) die Filtrationsmembran in eine Funktionalisierungslösung aus pNIPAM-NH₂, insbesondere gelöst in Trispuffer, getaucht wird.

7. Verfahren nach Anspruch 6, **dadurch gekennzeichnet, dass** die Filtrationsmembran in der Lösung zunächst für eine Dauer von 2 bis 4 Stunden bei einer Temperatur von 50°C bis 70°C und anschließend für eine Dauer von mehr als 6 Stunden zwischen 18°C und 25°C geschüttelt wird.

8. Verfahren nach einem der Ansprüche 1 bis 7, **dadurch gekennzeichnet, dass** die Filtrationsmembran nach dem Verfahrensschritt c) gewaschen und/oder getrocknet wird.

9. Verfahren nach einem der Ansprüche 1 bis 8, **dadurch gekennzeichnet, dass** die Dopaminlösung und die Beschichtungslösung keine Lösemittel für die Filtrationsmembran aufweisen.

10. Verfahren nach einem der Ansprüche 1 bis 9, **dadurch gekennzeichnet, dass** die verwendete Filtrationsmembran eine, insbesondere isoporöse und/oder integral-asymmetrische, Blockcopolymermembran ist, insbesondere auf der Grundlage eines PS-*b*-P4VP, eines PS-*b*-P2VP oder eines PS-*b*-PEO Blockcopolymers.

11. Thermoresponsive Mikrofiltrationsmembran oder Ultrafiltrationsmembran, insbesondere hergestellt oder herstellbar nach einem Verfahren nach einem der Ansprüche 1 bis 10, mit einer Polydopaminbeschichtung, die mit pNIPAM funktionalisiert ist.

12. Thermoresponsive Filtrationsmembran nach Anspruch 11, **dadurch gekennzeichnet, dass** eine Öffnung von Poren der Filtrationsmembran oberhalb von etwa 20°C, insbesondere oberhalb von etwa 25°C, auftritt.

13. Thermoresponsive Filtrationsmembran nach Anspruch 11 oder 12, **dadurch gekennzeichnet, dass** die Filtrationsmembran zusätzlich pH-responsiv ist, wobei insbesondere eine Schließung der Poren bei einem niedrigen pH-Wert, insbesondere unterhalb von etwa 3,8 bis 3,4, eintritt.

14. Thermoresponsive Filtrationsmembran nach einem der Ansprüche 11 bis 13, **dadurch gekennzeichnet, dass** die Filtrationsmembran eine Polymermembran, insbesondere eine isoporöse und/oder intregralasymmetrische Blockcopolymermembran, ist, insbesondere auf der Grundlage eines PS-*b*-P4VP, eines PS-*b-*P2VP oder eines PS-*b*-PEO Blockcopolymers.

## Claims

1. A method for producing a thermoresponsive microfiltration membrane or ultrafiltration membrane, by means of the following method steps:
a) a filtration membrane is wetted or coated with a dopamine solution,
b) the dopamine of the dopamine solution is polymerized in order to produce a polydopamine layer, and
c) the polydopamine-coated filtration membrane is immersed into a coating solution with an end-functionalized poly(*N*-isopropylacrylamide), and the poly(*N-*isopropylacrylamide) is bound to the polydopamine layer.

2. The method according to claim 1, **characterized in that** the end-functionalized poly(N-isopropylacrylamide) is amine-terminated.

3. The method according to claim 1 or 2, **characterized in that** the poly(N-isopropylacrylamide) has an average molecular weight Mₙ of approximately 1,000 to 10,000, in particular between 2,000 and 4,000, in particular at approximately 2,500.

4. The method according to one of claims 1 to 3, **characterized in that** in method step a), the filtration membrane is immersed in a dopamine solution consisting of dopamine hydrochloride, in particular dissolved in Tris buffer, in particular at room temperature, in particular for a duration of 30 to 120 minutes, in particular 45 to 75 minutes.

5. The method according to one of claims 1 to 4, **characterized in that** the filtration membrane is washed and/or dried in method step b), in particular at a temperature between 50°C and 70°C, in particular for at least 30 minutes, in particular between 45 minutes and 180 minutes.

6. The method according to one of claims 1 to 5, **characterized in that** in method step c), the filtration membrane is immersed in a functionalization solution consisting of pNIPAM-NH₂, in particular dissolved in Tris buffer.

7. The method according to claim 6, **characterized in that** the filtration membrane is first shaken in the solution for a duration of 2 to 4 hours at a temperature of 50°C to 70°C and then for a duration of more than 6 hours between 18°C and 25°C.

8. The method according to one of claims 1 to 7, **characterized in that** the filtration membrane is washed and/or dried after method step c).

9. The method according to one of claims 1 to 8, **characterized in that** the dopamine solution and the coating solution do not possess any solvent for the filtration membrane.

10. The method according to one of claims 1 to 9, **characterized in that** the employed filtration membrane is, in particular an isoporous and/or integral asymmetric, block copolymer membrane, in particular based on a PS-*b*-P4VP, a PS-*b*-P2VP or a PS-*b*-PEO block copolymer.

11. A thermoresponsive microfiltration membrane or ultrafiltration membrane, in particular produced or producible according to a method according to one of claims 1 to 10, with a polydopamine coating that is functionalized with pNIPAM.

12. The thermoresponsive filtration membrane according to claim 11, **characterized in that** pores of the filtration membrane open above approximately 20°C, in particular above approximately 25°C.

13. The thermoresponsive filtration membrane according to one of claims 11 to 12, **characterized in that** the filtration membrane is also pH-responsive, the pores closing in particular at a low pH, in particular below approximately 3.8 to 3.4.

14. The thermoresponsive filtration membrane according to one of claims 11 to 13, **characterized in that** the filtration membrane is a polymer membrane, in particular an isoporous and/or integral asymmetric block copolymer membrane, in particular based on a PS-*b*-P4VP, a PS-*b*-P2VP or a PS-*b*-PEO block copolymer.

## Revendications

1. Procédé de production d'une membrane de microfiltration ou d'une membrane d'ultrafiltration thermosensible, comprenant les étapes de procédé suivantes :
a) une membrane de filtration est mouillée ou revêtue avec une solution de dopamine,
b) la dopamine de la solution de dopamine est polymérisée pour donner une couche de polydopamine, et
c) la membrane de filtration revêtue de polydopamine est immergée dans une solution de revêtement ayant un poly(N-isopropylacrylamide) fonctionnalisé en bout de chaîne, et le poly(N-isopropylacrylamide) est lié à la couche de polydopamine.

2. Procédé selon la revendication 1, **caractérisé en ce que** le poly(N-isopropylacrylamide) fonctionnalisé de bout de chaîne est à terminaison amine.

3. Procédé selon la revendication 1 ou la revendication 2, **caractérisé en ce que** le poly(N-isopropylacrylamide) a un poids moléculaire moyen Mₙ d'environ 1000 à 10000, en particulier compris entre 2000 et 4000, en particulier d'environ 2500.

4. Procédé selon l'une quelconque des revendications 1 à 3, **caractérisé en ce qu'**à l'étape a) du procédé, la membrane de filtration est immergée dans une solution de dopamine consistant en du chlorhydrate de dopamine, en particulier dissoute dans du tampon Tris, en particulier à la température ambiante, en particulier pour une période de 30 à 120 minutes, en particulier de 45 à 75 minutes.

5. Procédé selon l'une quelconque des revendications 1 à 4, **caractérisé en ce qu'**à l'étape b), la membrane de filtration est lavée et / ou séchée, en particulier à une température comprise entre 50°C et 70°C, de préférence pendant au moins 30 minutes, de préférence entre 45 minutes et 180 minutes.

6. Procédé selon l'une quelconque des revendications 1 à 5, **caractérisé en ce qu'**à l'étape de procédé c), la membrane de filtration est immergée dans une solution de fonctionnalisation de pNIPAM-NH₂, en particulier, dissoute dans du tampon Tris.

7. Procédé selon la revendication 6, **caractérisé en ce que** la membrane de filtration est tout d'abord secouée dans la solution pendant une durée de 2 à 4 heures à une température de 50°C à 70°C puis pendant une période de plus de 6 heures entre 18°C et 25°C.

8. Procédé selon l'une quelconque des revendications 1 à 7, **caractérisé en ce que** la membrane de filtration est lavée et / ou séchée après l'étape c).

9. Procédé selon l'une quelconque des revendications 1 à 8, **caractérisé en ce que** la solution de dopamine et la solution de revêtement ne comprennent pas de solvant pour la membrane de filtration.

10. Procédé selon l'une quelconque des revendications 1 à 9, **caractérisé en ce que** la membrane de filtration utilisée est une membrane en copolymère séquencé, en particulier, isoporeuse et / ou intégrale-asymétrique, en particulier, à base d'un PS-*b*-P4VP, un PS-*b*-P2VP ou un copolymère séquencé PS-*b*-PEO.

11. Membrane de microfiltration ou membrane d'ultrafiltration thermosensible, en particulier produite ou apte à être produite par un procédé selon l'une quelconque des revendications 1 à 10, ayant un revêtement de polydopamine qui est fonctionnalisé avec un pNIPAM.

12. Membrane de filtration thermosensible selon la revendication 11, **caractérisée en ce qu'**une ouverture des pores de la membrane de filtration se produit au-dessus d'environ 20°C, en particulier au-dessus d'environ 25°C.

13. Membrane de filtration thermosensible selon la revendication 11 ou la revendication 12, **caractérisée en ce que** la membrane de filtration est également sensible au pH, en particulier une fermeture des pores se produit à une faible valeur de pH, en particulier en dessous d'environ 3,8 à 3,4.

14. Membrane de filtration thermosensible selon l'une quelconque des revendications 11 à 13, **caractérisée en ce que** la membrane de filtration est une membrane de polymère, en particulier une membrane en copolymère séquencé isoporeuse et/ou intregrale-asymetrique, en particulier à base d'un PS-*b*-P4VP, un PS-*b*-P2VP ou un copolymère séquencé PS-*b*-PEO.
